# EUROPÄISCHE PATENTANMELDUNG

(11) **EP 1 701 504 A1**
(43) Veröffentlichungstag der Anmeldung: **13.09.2006**
(21) Anmeldenummer: 05460023.4
(22) Anmeldetag: 29.08.2005
(51) Int. Cl.: H04L 29/06, H04N 5/00, H04N 7/24, H04N 7/173, H04N 5/76

(54) **Verfahren und Anordnung zur Steuerung einer Übertragung von Mediaobjekten**

(71) Anmelder: SIEMENS AKTIENGESELLSCHAFT, 80333 München (DE)
(72) Erfinder: Baumgarten, Hans-Georg, 81667 München (DE); Bieser, Thomas, 80799 München (DE); Erb, Olaf, 85567 Grafing (DE); Stachowiak, Adrian, 58-506 Jelenia Gora (PL); Vindeby, Per, 81739 München (DE)

(57) **Zusammenfassung**

Die Erfindung betrifft ein Verfahren zur Steuerung einer Übertragung von Mediaobjekten, die als kontinuierlicher Datenstrom von einem Server (S1) zu einem Endgerät (EG) zur Wiedergabe übertragen werden. Dabei werden in Kanälen gruppierbare Mediaobjekte von einer Quelle (Qu) für einen Server bereitgestellt. Die Mediaobjekte werden von der Quelle zum Server übermittelt und dort zusammengefasst als kontinuierlicher Datenstrom zum Endgerät übertragen. Eine Steuerung der Datenstromübertragung erfolgt über einen Steuerungskanal (CTSK), wobei der Steuerungskanal zwischen dem Endgerät und dem Server vorgesehen ist und zur Steuerung seitens des Endgeräts gebildete Offsetwerte an den Server übertragbar sind, wobei ein Offsetwert eine Position innerhalb des Datenstroms festlegt.
Seitens des Endgeräts wird ein Steuerungsbefehl gebildet, der anstelle eines Offsetwerts über den Steuerungskanal an den ersten Server übertragen wird. Der Steuerungsbefehl wird seitens des ersten Servers erkannt und zur Steuerung der Datenstromüberragung verwendet.

## Beschreibung

Die Erfindung betrifft ein Verfahren zur Steuerung einer Übertragung von Mediaobjekten, die als kontinuierlicher Datenstrom zwischen einem ersten Server und einem Endgerät übertragen werden.

Zur Übertragung von Multimediadaten bzw. von Mediaobjekten, wie beispielsweise Musikvideos, Videofilmen oder ähnlichem, wird eine als "Streaming" bezeichnete Übertragungstechnik verwendet. Dabei werden die Mediaobjekte von einer als "repository" bezeichneten Quelle zur Verfügung gestellt und auf Anforderung von einem ersten Server eingelesen. Dieser erste Server sendet zugeordnete Inhalte der Mediaobjekte entweder einzeln oder als Folge in Form eines kontinuierlichen Datenstroms zu einem Endgerät, das beispielsweise als Funkkommunikationsendgerät oder als "Mobile" ausgebildet sein kann. Dabei erfolgt die Datenstromübertragung in "Realzeit" und somit aus Sicht eines Endgerätekunden verzögerungsfrei.

Zur Durchführung der "Streaming"-Übertragung werden bekannte Übertragungstechniken bzw. Übertragungsstandards verwendet - typischerweise unter Verwendung von GPRS, UMTS, WLAN oder DSL, ggf. unter teilweiser Benutzung des Internet.

Beim "Streaming" werden übertragene Inhalte der Mediaobjekte seitens des Endgeräts sofort wiedergegeben und nicht zwischengespeichert. Dadurch unterscheidet sich "Streaming" vom bekannten "Download"-Verfahren, bei dem eine Darstellung bzw. Wiedergabe eines Datei-Inhalts in der Regel erst nach vollständig erfolgtem Herunterladen der Datei erfolgen kann.

Durch die Verwendung von "Streaming" können zur Darstellung der Inhalte der Mediaobjekte Endgeräte mit einer geringen internen Speicherkapazität verwendet werden. Damit ist auch eine Übertragung und Darstellung großer Datenmengen problemlos möglich.

Das Streaming wird hinsichtlich der Übertragungsgeschwindigkeit im Allgemeinen nicht durch ein Endgerät sondern durch einen Server gesteuert. Damit ist insbesondere eine gerechte Gebührenberechnung leicht realisierbar, weil nur diejenigen Inhalte bzw. Daten von Mediaobjekten übertragen werden, die tatsächlich teilnehmerseitig angefordert werden.

Unter Verwendung des Signalisierungsprotokolls RTSP, das im Rahmen von 3GPP definiert ist, werden dem Endgeräteteilnehmer einige wenige Funktionen zur Steuerung der Datenstromübertragung angeboten.
Dazu gehören derzeit:
- "Pause" und "Play", d.h. eine zu einem CD-Player vergleichbare Funktion zum anhalten und weiterspielen eines Mediaobjekts, und
- "Fast Forward", d.h. eine zu einem Kassettengerät oder CD-Player vergleichbare Funktion zum schnellen Vorspulen innerhalb eines Datenstroms.

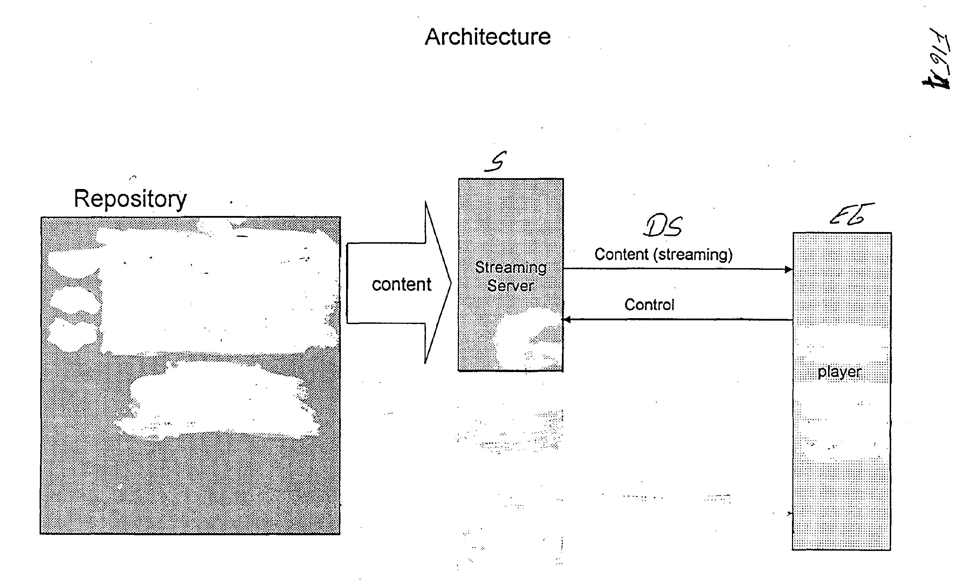

FIG 7 zeigt eine aus dem Stand der Technik bekannte Anordnung zur Datenstromübertragung.

Eine als "Repository" bezeichnete Quelle stellt ein Mediaobjekt, beispielsweise eine Video-Datei zur Verfügung. Das Mediaobjekt wird als Inhalt "content" zu einem als "Streaming Server" bezeichneten Server S übertragen.

Seitens des Server S werden die Inhalte "content" als kontinuierlicher Datenstrom DS bzw. als "content (streaming)" an ein Endgerät EG für eine "Echtzeit-" bzw. "Realtime"-Darstellung, die mit Hilfe einer Wiedergabeeinrichtung "player" erfolgt, übertragen.

Mit Hilfe des eingangs erwähnten RTSP-Signalisierungsprotokolls wird über einen Steuerungskanal "Control" beispielsweise für die Funktion "Fast Forward" ein Offsetwert vom Endgerät EG zum Server S übertragen.

Der Offsetwert definiert dabei einen Zeitpunkt, eine Stelle bzw. eine Wiedergabeposition innerhalb des Datenstroms, vergleichbar zu einem Zähler bei einem herkömmlichen Kassettengerät, ab dem seitens des Endgeräts eine Wiedergabe von Inhalten des Datenstroms gewünscht wird. Der Offsetwert ist unabhängig von Inhalten der durch Streaming übertragenen Mediaobjekte.

Beim Server S wird als Reaktion auf den Offsetwert mit einer Übertragung des Mediaobjekts von einer neuen Position begonnen, die durch den Offsetwert definiert wird. Damit wird ein "Fast Forward" bzw. ein springen innerhalb des Mediaobjekts ermöglicht, ohne dabei zwischenliegende Inhalte des Mediaobjekts seitens der Quelle "repository" anzufordern bzw. ohne diese an das Endgerät EG übertragen zu müssen.

Werden seitens der Quelle "Repository" mehrere Fernsehkanäle angeboten, wobei ein Fernsehkanal wiederum aus mehreren Mediaobjekten bestehen kann, so könnten diese zu einem Datenstrom zusammengefasst seitens des Endgeräts EG im Rahmen der "Streaming"-Übertragung dargestellt werden. Aufgrund der genannten eingeschränkten Steuerungsmöglichkeiten wäre dann jedoch weder ein genaues "skippen" bzw. springen zu einem bestimmten Mediaobjekt, noch ein Umschalten auf einen anderen Fernsehkanal, möglich.

Es ist Aufgabe der vorliegenden Erfindung, eine Steuerung einer Übertragung von Mediaobjekten eines kontinuierlichen Datenstroms anzugeben, mit der bei geringem zusätzlichen Aufwand seitens eines Endgeräteteilnehmers eine Vielzahl von Darstellungen bzw. von Auswahlmöglichkeiten von angebotenen Mediaobjekten ermöglicht werden, wobei es sich um Mediaobjekte eines Kanals oder mehrerer Kanäle handeln kann.

Diese Aufgabe wird durch die Merkmale des Patentanspruchs 1 und des Patentanspruchs 6 gelöst. Vorteilhafte Weiterbildungen sind in den Unteransprüchen angegeben.

Beim erfindungsgemäßen Verfahren werden abweichend zur Steuerung durch Offsetwerte seitens des Endgeräts Steuerungsbefehle gebildet, die über einen Steuerungskanal zum ersten Server übertragen werden. Seitens des ersten Servers werden durch eine Erkennungseinheit die von den Offsetwerten abweichenden Steuerungsbefehle erkannt. Basierend auf den Steuerungsbefehlen wird seitens des ersten Servers die Datenstromübertragung gesteuert.

In einer vorteilhaften Weiterbildung ersetzen die gebildeten Steuerungsbefehle die Offsetwerte und werden über den gleichen Steuerungskanal übertragen, der bislang zur Übertragung der Offsetwerte verwendet wurde.

Nachfolgend wird die Erfindung anhand einer Zeichnung näher erläutert. Dabei zeigt:
- FIG 1: ein Blockschaltbild einer Anordnung zur Durchführung des erfindungsgemäßen Verfahrens,
- FIG 2: ein Ablaufdiagramm zu einem erfindungsgemäßen Umschalten aus einem beliebigem Kanal zum Anfang eines ausgewählten Mediaobjekts in einen zweiten Kanal,
- FIG 3: ein Ablaufdiagramm zu einem erfindungsgemäßen Umschalten auf einen ausgewählten Kanal unter Berücksichtigung einer Funktion "Wall Clock Adjustment),
- FIG 4: ein Ablaufdiagramm zu einem erfindungsgemäßen Zurückschalten auf einen Kanal, der mit einer Funktion "Pause" markiert wurde,
- FIG 5: ein Ablaufdiagramm zum Setzen einer als "Bookmark" bezeichneten Markierung sowie ein Springen zu dieser Markierung,

- FIG 6: ein Ablaufdiagramm zum Umschalten zwischen Kanälen mittels herkömmlichen Endgeräten, und
- FIG 7: die in der Beschreibungseinleitung genannte Anordnung zur Steuerung einer Datenstromübertragung gemäß dem Stand der Technik.

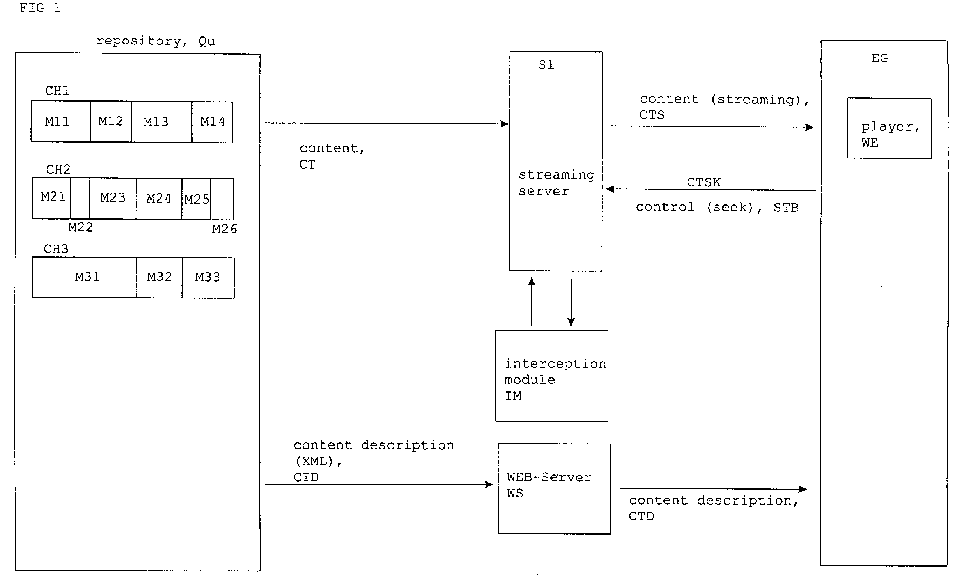

FIG 1 zeigt ein Blockschaltbild einer Anordnung zur Durchführung des erfindungsgemäßen Verfahrens.

Eine als "repository" bezeichnete Quelle Qu stellt beispielsweise drei Kanäle CH1, CH2 und CH3 als Fernsehkanäle zur Verfügung. Dabei sind einem ersten Kanal CH1 vier Mediaobjekte M11, M12, M13 und M14 zugeordnet. Einem zweiten Kanal CH2 sind sechs Mediaobjekte M21, M22, M23, M24, M25 und M26 zugeordnet. Einem dritten Kanal CH3 sind wiederum drei Mediaobjekte M31, M32 und M33 zugeordnet.

Als "content" bezeichnete Inhalte CT der Mediaobjekte M11 bis M33 der Kanäle CH1 bis CH3 werden von der Quelle Qu an den Server S1 übertragen, der daraus einen als "content (streaming)" bezeichneten kontinuierlichen Datenstrom CTS bildet und diesen als an ein Endgerät EG überträgt.

Parallel zum Datenstrom kann wahlweise von der Quelle Qu eine als "content description" bezeichnete Beschreibung CTD der Mediaobjekte M11 bis M33 der Kanäle CH1 bis CH3 über einen weiteren Server WS, der hier als "WEB-Server" ausgebildet ist, zum Endgerät EG übertragen.

Die Beschreibung CTD beinhaltet beispielsweise als "Metadaten" bezeichnete Beschreibungen der jeweiligen Inhalte der Mediaobjekte sowie Informationen über jeweilige zeitliche Längen der einzelnen Mediaobjekte M11 bis M31.

Anhand der übermittelten Beschreibung CTD ist es seitens des Endgeräts EG möglich, Offsetwerte zur Steuerung der Übertragung des Datenstroms CTS zu erstellen. Diese Offsetwerte können über einen Steuerungskanal CTSK, der zwischen dem Endgerät EG und dem Server S1 angeordnet ist, an den Server S übertragen werden.

Bei der vorliegenden Erfindung werden jedoch die Offsetwerte zumindest teilweise durch Steuerungsbefehle STB, die als "control (seek)" bezeichnet werden, ersetzt. Die Steuerungsbefehle STB können im Endgerät fest programmiert sein oder ebenfalls unter Verwendung der Beschreibung CTD erstellt und vorteilhafterweise über den Steuerungskanal CTSK zum Server S1 übertragen werden.

Vorteilhafterweise werden die Steuerungsbefehle STB in einem Wertebereich bzw. Zeitfenster übertragen, das zur Übertragung der Offsetwerte vorgesehen wäre.

Seitens des Server S1 ist eine als "interception module" bezeichnete Einrichtung IM vorgesehen, die erkennt, ob es sich um eine Meldung von Offsetwerten oder um eine Meldung von Steuerungsbefehlen STB handelt.

Seitens des Endgeräts EG ist eine als "player" bezeichnete Einrichtung zur Wiedergabe WE vorgesehen, die zur Darstellung der Mediaobjekte des Datenstroms CTS verwendet wird. Diese kann beispielsweise als Player mit Mitteln zur Durchführung der erfindungsgemäßen Verfahrensschritte ausgebildet sein oder als Browser-implementiertes Dienstprogramm realisiert sein.

Für die Rückmeldung der Steuerungsbefehle STB stehen beispielsweise zwischen 1 ms und 999 ms gemäß dem eingangs genannten RTSP-Signalsierungsprotokoll zur Verfügung, die eigentlich zur Übertragung von Offsetwerten verwendbar wären.

Beispielhaft werden nachfolgend einige mögliche Steuerungsbefehle STB beschrieben. Zum Beispiel definiert eine erste Stelle ST1 des Steuerungsbefehls STB einen Zielkanal, während eine zweite Stelle ST2 und eine dritte Stelle ST3 ein Zielmediaobjekt definieren:

| ST1 - ST2 - ST3 | Steuerungsbefehl |
|---|---|
| | |
| 1-0-0 | Umschaltung auf einen ersten Kanal CH1 |
| 2-0-0 | Umschaltung auf einen zweiten Kanal CH2 |
| 1-0-1 | Umschaltung auf einen ersten Kanal CH1 zu dessen erstem Mediaobjekt (vergleichbar M11) |
| 2-0-3 | Umschaltung auf einen zweiten Kanal CH2 zu dessen drittem Mediaobjekt (vergleichbar M23) |
| 5-0-1 | Umschaltung auf einen fünften Kanal CH5 zu dessen erstem Mediaobjekt |

Für weitere Steuerungsbefehle STB ist es möglich, Kombinationen der zweiten Stelle ST2 und der dritten Stelle ST3 für relative Sprünge und für zusätzliche Steuerungsmöglichkeiten zu verwenden, sofern die erste Stelle ST1 mit einem Wert von "0" belegt ist.

Damit können über einen Wertebereich von 0-0-1 bis 0-9-9 insgesamt 99 zusätzliche Steuerungsbefehle definiert werden. Beispielsweise sind dies:

| ST1 - ST2 - ST3 | Steuerungsbefehl |
|---|---|
| | |
| 0-0-1 | Umschaltung um einen Kanal nach oben |
| 0-0-2 | Umschaltung um einen Kanal nach unten |
| 0-0-3 | Umschaltung auf einen Kanalbeginn bzw. auf ein erstes Mediaobjekt eines betrachteten Kanals |
| 0-1-1 | Umschaltung innerhalb eines Kanals von einem Mediaobjekt auf ein benachbartes, nachfolgendes Mediaobjekt des gleichen Kanals |
| 0-1-2 | Umschaltung innerhalb eines Kanals von einem Mediaobjekt auf den Anfang des Mediaobjekts |
| 0-2-1 | Umschaltung auf ein markiertes Mediaobjekt, wobei die Markierung als "hot scene" seitens eines Betreibers vorgegeben wird. Hierbei können auch mehrere "hot scenes" nacheinander automatisch angesprungen werden. |
| 0-3-1 | Setzen einer als "Bookmark" bezeichneten Markierung an einer beliebigen Stelle im "content" |
| 0-3-2 | Springen auf eine beliebige Position im "Content", wobei die Markierung als "Bookmark" seitens des Endgeräteteilnehmers vorgegeben wurde. Dabei könnte ST3 auch eine Bookmark-Nummer definieren für den Fall mehrerer gesetzter Bookmark. |
| 0-4-1 | Anschalten bzw. Abschalten von Werbungs-Mediaobjekten |
| 0-5-1 | Markierung für eine Rating-Funktion für Inhalte von Mediaobjekten, die gefallen - "like content" |
| 0-5-2 | Markierung für eine Rating-Funktion für Inhalte von Mediaobjekten, die nicht gefallen - "dislike content" |

In einer vorteilhaften Weiterbildung wird eine Funktion "Wall Clock Adjustment" vorgesehen, um vergleichbar zu einer Umschaltung zwischen Kanälen eines Fernsehers verstrichene Zeitbereiche bzw. Sendezeiten nachzuempfinden.

Beispielsweise wird bei einem Umschalten von einem ersten Kanal auf einen zweiten Kanal seitens des Servers S1 oder seitens der Einrichtung IM ein erster Umschaltzeitpunkt bestimmt. Für den Fall einer nachfolgend durchgeführten Umschaltung vom zweiten Kanal zurück in den ersten Kanal wird ein zweiter Umschaltzeitpunkt bestimmt und daraus eine verstrichene Zeit errechnet. Am Endgerät werden dann die mediaobjekte bzw. der "content" ab einem Zeitpunkt dargestellt, der sich aus dem ersten Umschaltzeitpunkt plus der verstrichenen Zeit errechnet.

Mit anderen Worten erfolgt ein Umschalten zwischen den beiden Kanälen vergleichbar zum bekannten Umschalten zwischen Fernsehprogrammen eines Fernsehers, der Endgeräteteilnehmer "verpasst" quasi einen Teil des Programms des ersten Kanals.

Auf Wunsch des Endgeräteteilnehmers ist es jedoch auch hier möglich, den "verpassten" Teil eines Mediaobjekts nachträglich durch einen entsprechenden Sprung zu betrachten.

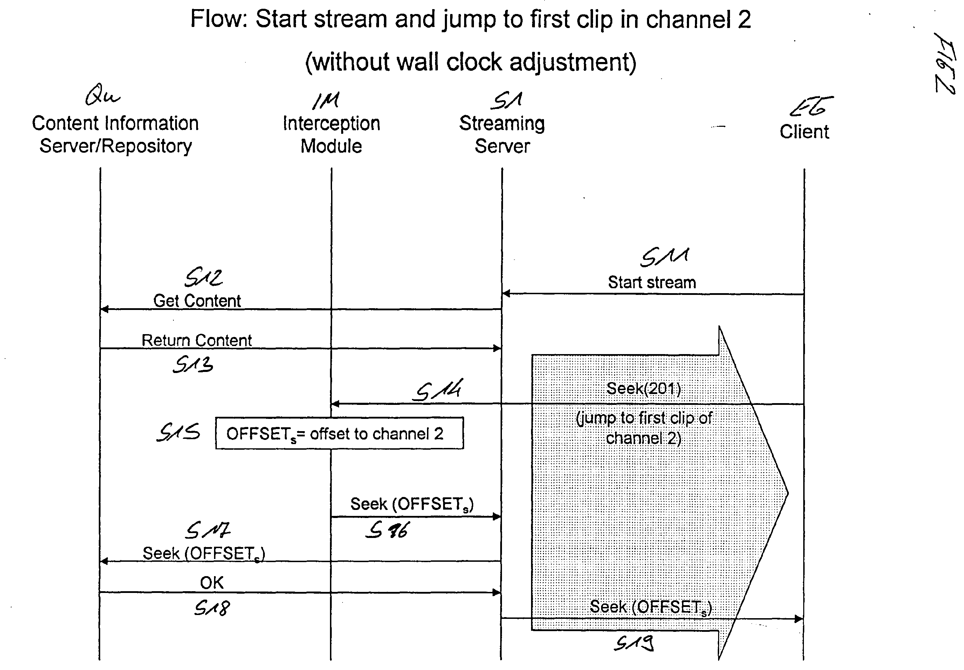

FIG 2 zeigt ein Ablaufdiagramm zu einem erfindungsgemäßen Umschalten aus einem beliebigem Kanal zu einem als "Clip" bezeichneten ersten Mediaobjekt eines zweiten Kanals.

In einem ersten Schritt S11 wird seitens des als "client" bezeichneten Endgeräts EG mit einem Befehl "start stream" eine Datenstromübertragung beim Server S1 angefordert.

In einem zweiten Schritt S12 werden seitens des Server S1 bei der Quelle Qu mit einem Befehl "get content" Inhalte für die Datenstromübertragung angefordert.

In einem dritten Schritt S13 werden seitens der Quelle Qu die angeforderten als "return content" bezeichneten Inhalte an den Server S1 übertragen.

In einem vierten Schritt S14 wird seitens des Endgeräteteilnehmers eine Umschaltung auf ein erstes Mediaobjekt eines zweiten Kanals gewünscht. Durch Auswahl einer Schaltfläche, beispielsweise über ein am Endgerät EG dargestelltes Browserfenster, wird seitens des Endgeräts EG mit einem Steuerungsbefehl "seek(201)" eine Umschaltung von übertragenen Inhalten auf das erste Mediaobjekt des zweiten Kanals über den Server S1 bei der Einrichtung IM angefordert.

Die Einrichtung IM ermittelt in einem fünften Schritt S15 aus dort bekannten Beschreibungsinhalten einen Wert "OFFSET_{S}", der innerhalb des Datenstroms den Beginn des ersten Mediaobjekts des angeforderten zweiten Kanals definiert.

In einem sechsten Schritt S16 wird seitens der Einrichtung IM der Wert "OFFSET_{S}" an den Server S1 als Suchanforderung "seek(OFFSET_{S})" übertragen.

In einem siebten Schritt S17 wird seitens des Server S1 die Suchanforderung "seek(OFFSET_{S})" an die Quelle Qu übertragen, damit diese die für den Datenstrom benötigten Inhalte zeitgerecht an den Server S1 übermitteln kann. Der Empfang der Suchanforderung wird in einem achten Schritt S18 mit einem "OK" quittiert.

In einem neunten Schritt S19 erfolgt innerhalb des Server S1 ein "umschalten" zum Beginn des zweiten Kanals unter Verwendung des Wertes "OFFSET_{S}", so dass der Datenstrom von der neuen Position an das Endgerät EG übertragen werden kann. Der tatsächliche Offset-Wert "OFFSET_{S}" wird vorteilhafterweise an das Endgerät übertragen.

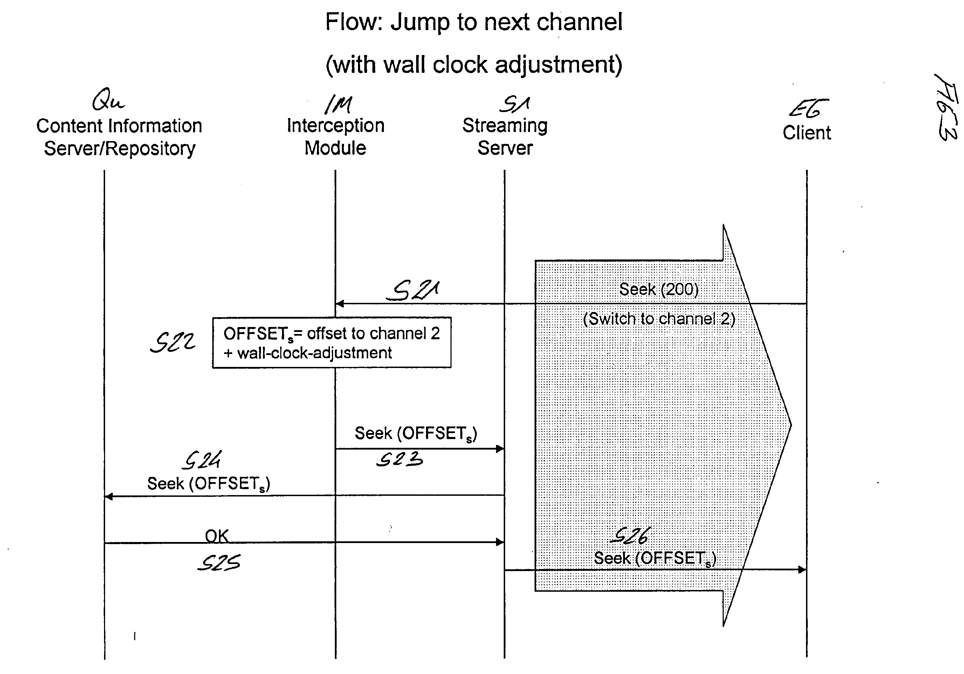

FIG 3 zeigt ein Ablaufdiagramm zu einem erfindungsgemäßen Umschalten auf einen ausgewählten Kanal unter Berücksichtigung einer Funktion "Wall Clock Adjustment".

In einem ersten Schritt S21 wird seitens des Endgeräts EG mit einem Befehl "seek(200)" eine Umschaltung auf einen zweiten Kanal über den Server S1 bei der Einrichtung IM angefordert.

Die Einrichtung IM ermittelt in einem zweiten Schritt S22 aus dort bekannten Beschreibungsinhalten einen Wert "OFFSET_{S}", der innerhalb des Datenstroms eine aktuelle zeitgebundene Wiedergabeposition des angeforderten zweiten Kanals definiert. Diese Anpassung an die zeitgebundene Wiedergabeposition wird als "Wall-Clock-Adjustment" bezeichnet.

In einem dritten Schritt S23 wird seitens der Einrichtung IM der Wert "OFFSET_{S}" an den Server S1 als Suchanforderung "seek(OFFSET_{S})" übertragen.

In einem vierten Schritt S24 wird seitens des Server S1 die Suchanforderung "seek(OFFSET_{S})" an die Quelle Qu übertragen, damit diese die für den Datenstrom benötigten Inhalte zeitgerecht an den Server S1 übermitteln kann. Der Empfang der Suchanforderung wird in einem fünften Schritt S25 mit einem "OK" quittiert.

Seitens des Server S1 erfolgt ein "umschalten" in den zweiten Kanal unter Verwendung des Wertes "OFFSET_{S}", so dass der Datenstrom entsprechend umgebildet an das Endgerät EG übertragen werden kann.

In einem sechsten Schritt S26 wird die Suchanforderung "seek(OFFSET_{S})" an das Endgerät EG übermittelt.

Der zweite Kanal wird bevorzugt derart übertragen, dass der zweite Kanal unter Berücksichtigung der Funktion "Wall Clock Adjustment" seitens des Endgeräts EG dargestellt wird.

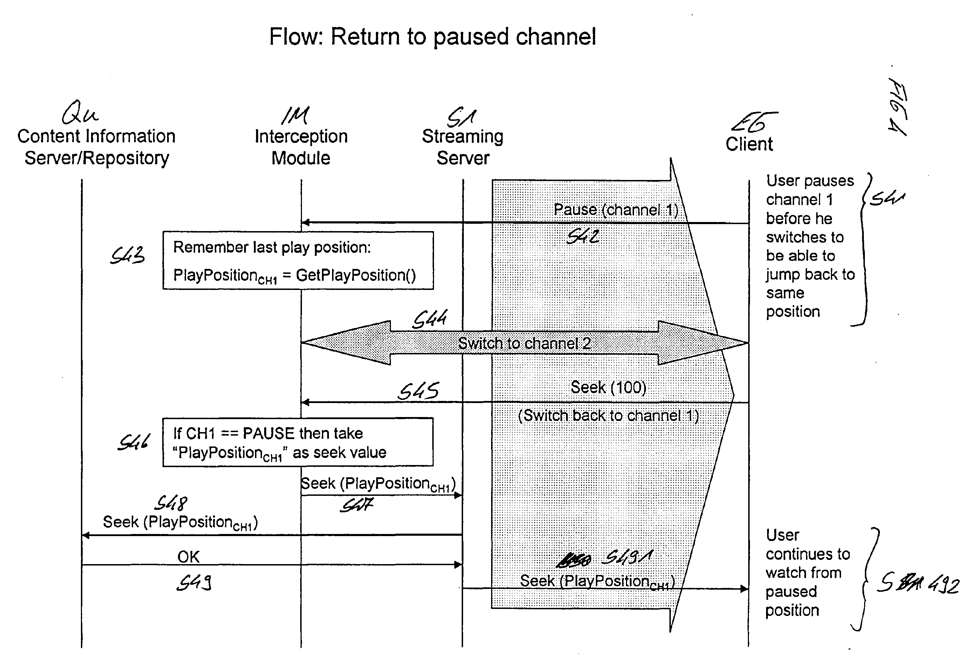

FIG 4 zeigt ein Ablaufdiagramm zu einem erfindungsgemäßen Zurückschalten auf einen Kanal, der mit einer Funktion "Pause" angehalten wurde.

In einem ersten Schritt S41 wird seitens des Endgeräts EG ein als "channel 1" bezeichneter erster Kanal mit einem Befehl "Pause" durch einen Endgeräteteilnehmer angehalten.

Um dies zu signalisieren wird in einem zweiten Schritt S42 ein Befehl "Pause (channel 1)" vom Endgerät EG über den Server S1 der Einrichtung IM gemeldet.

Die Einrichtung IM ermittelt in einem dritten Schritt S43 mit Hilfe einer Funktion "remember last play position" einen Wert "PlayPosition_{CH1}", der die Stelle der vom Endgeräteteilnehmer gewünschten Pause definiert.

In einem vierten Schritt S44 wird durch die Einrichtung IM ein Umschalten auf einen als "channel 2" bezeichneten zweiten Kanal durchgeführt.

In einem fünften Schritt S45 wird seitens des Endgeräts EG mit einem Befehl "seek(100)" eine Zurückschaltung auf den ersten Kanal über den Server S1 bei der Einrichtung IM angefordert.

Die Einrichtung IM ermittelt in einem sechsten Schritt S46, ob der erste Kanal mit "Pause" markiert ist oder nicht. Ist dies der Fall, übermittelt die Einrichtung IM in einem siebten Schritt an den Server S1 die früher ermittelte Stelle "PlayPosition_{CH1}".

In einem achten Schritt S48 wird seitens des Server S1 eine Suchanforderung "seek(PlayPosition_{CH1})" an die Quelle Qu übertragen, damit diese die für den Datenstrom benötigten Inhalte zeitgerecht an den Server S1 übermitteln kann. Der Empfang der Suchanforderung wird in einem neunten Schritt S49 mit einem "OK" quittiert.

In einem zehnten Schritt S491 erfolgt innerhalb des Server S1 ein "umschalten" auf die Stelle PlayPosition_{CH1}", so dass der Datenstrom an das Endgerät EG fortgeführt werden kann - Schritt S492.

Vorteilhaft wird im Schritt S492 dem Endgerät ein tatsächlicher Wert "Offsetₛ " übermittelt.

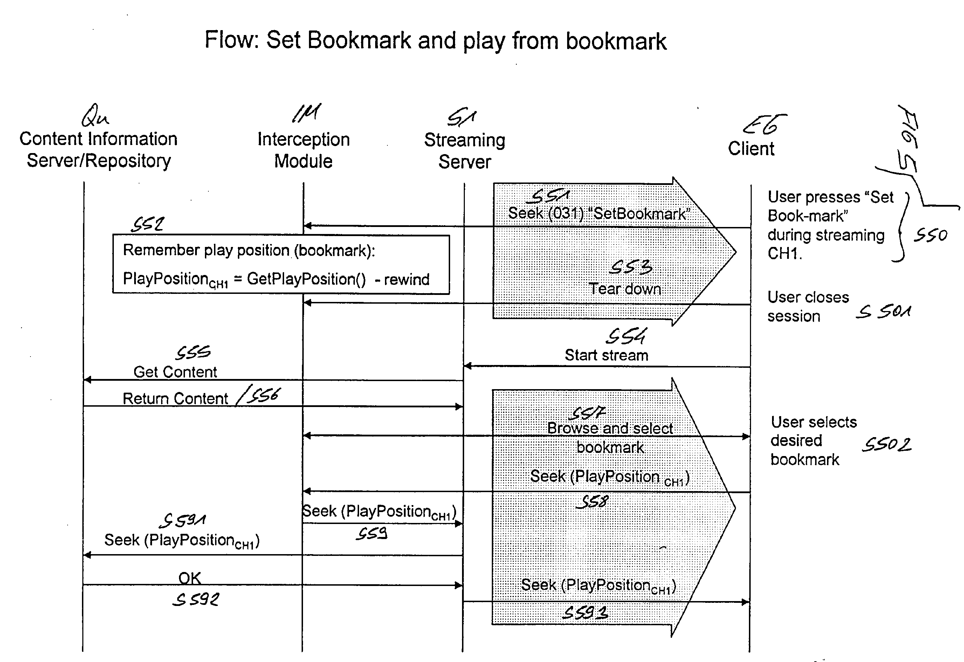

FIG 5 zeigt ein Ablaufdiagramm zum Setzen einer als "Bookmark" bezeichneten Markierung sowie ein Springen zu dieser Markierung.

In einem Schritt S50 wird seitens des Endgeräts EG eine beliebige Position im Content während der "Streaming"-Übertragung mit einem Befehl "Set Bookmark" durch einen Endgeräteteilnehmer markiert.

Um dies zu signalisieren wird in einem Schritt S51 ein Befehl "seek(031)" vom Endgerät EG über den Server S1 der Einrichtung IM gemeldet.

Die Einrichtung IM ermittelt in einem Schritt S52 mit Hilfe einer Funktion "remember play position (bookmark)" einen Wert "PlayPosition_{CH1}", der die Stelle vom Endgeräteteilnehmer gesetzten "Bookmark" definiert.

Dabei kann vorteilhaft die Markierung im Sinne einer "rewind"-Funktion zeitlich etwas "zurückgeschoben" werden. Dadurch wird es dem Endgeräteteilnehmer ermöglicht, für den Fall eines etwas zu spät gesetzten "Bookmarks" ein dem Bookmark vorangegangenes Geschehen trotzdem zu betrachten, bzw. einen rechtzeitigen Einstieg zur Wiedergabe auszuwählen.

In einem Schritt S501 beendet der Endgeräteteilnehmer seine als "session" bezeichnete Übertragung durch einen Befehl "Tear down", der vom Endgerät EG an die Einrichtung IM übertragen wird.

In den Schritten S55 und S56 werden seitens des Server S1 Inhalte bei der Quelle Qu mit einem Befehl "Get Content" angefordert und die Inhalte als "Return Content" an den Server S1 übertragen.

In einem Schritt S502 fordert der Endgeräteteilnehmer das von ihm gesetzte "Bookmark" an, d.h. er will innerhalb des Datenstroms den Content ab dem gesetzten "Bookmark" betrachten.

In einem Schritt S57 wird beim Endgerät EG und bei der Einrichtung IM mittels "browse and select" das gewünschte "Bookmark" vom Endgeräteteilnehmer ausgewählt.

In einem Schritt S58 wird seitens des Endgeräts EG eine Suchanforderung "seek(PlayPosition_{CH1})" an die Einrichtung IM übertragen. Dies kann entweder mittels eines Offset-Werts erfolgen, bei dem ein tatsächlicher Offset im content zu diesem Bookmark bestimmt wird, oder es wird vorteilhaft ein Steuerungskommando übertragen, beispielsweise als "seek(032)".

Diese Anforderung wird in einem Schritt 59 an den Server S1 weitergeleitet und in einem Schritt S591 an die Quelle Qu weitergeleitet, damit die für den Datenstrom benötigten Inhalte zeitgerecht übermittelt werden können.

Der Empfang der Suchanforderung wird in einem Schritt S592 mit einem "OK" quittiert.

In einem Schritt S593 erfolgt innerhalb des Server S1 ein "umschalten" auf die Stelle "PlayPosition_{CH1}".

Vorteilhaft erfolgt eine Übermittlung eines tatsächlichen Offset-Werts "OFFSET_{S}" zum Endgerät.

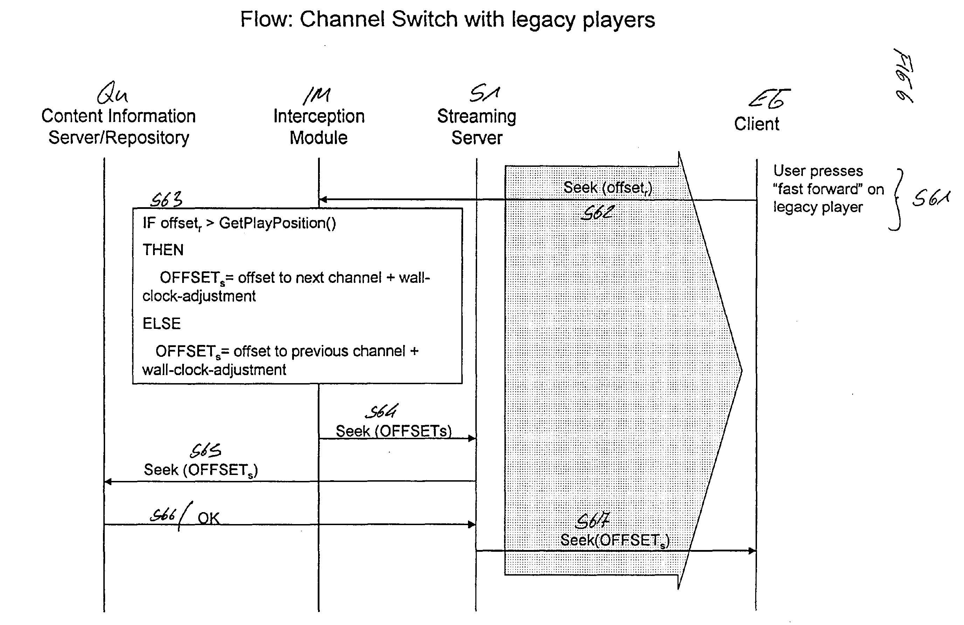

FIG 6 zeigt ein Ablaufdiagramm zum Umschalten zwischen Kanälen bei herkömmlichen Endgeräten.

In einem ersten Schritt S61 wird seitens des Endgeräts EG, das als herkömmliches Endgerät ausgebildet ist, eine als "Fast Forward" bezeichnete Taste bzw. Befehl ausgewählt.

Um dies zu signalisieren wird in einem zweiten Schritt S62 ein Befehl "seek(offsetᵣ)" vom Endgerät EG über den Server S1 der Einrichtung IM gemeldet.

Die Einrichtung IM ermittelt in einem dritten Schritt S63 anhand des Wertes "offsetᵣ " mit Hilfe einer "IF-THEN-ELSE"-Funktion ob eine Umschaltung auf einen nachfolgenden Kanal oder ob eine Umschaltung auf einen vorhergehenden Kanal stattfinden soll, jeweils unter Verwendung der Funktion "Wall-Clock-Adjustment".

In einem vierten Schritt S64 wird ein Befehl "seek(OFFSETs)" der ermittelte OFFSETs zum neuen Kanal von der Einrichtung IM an den Server S1 übertragen.

In einem fünften Schritt S65 wird der Befehl "seek(OFFSETs)" vom Server S1 an die Quelle Qu übertragen, damit die für den Datenstrom benötigten Inhalte zeitgerecht übermittelt werden können.

Der Empfang des Befehls wird in einem sechsten Schritt S66 mit einem "OK" quittiert.

In einem siebten Schritt S67 erfolgt innerhalb des Server S1 ein "umschalten" auf die Stelle "OFFSETs", so dass der Datenstrom entsprechend umgebildet an das Endgerät EG übertragen werden kann.

Vorteilhaft wird der tatsächliche Offset-Wert "OFFSET_{S}" dem Endgerät übermittelt.

Neben der vorstehend beschriebenen "Wall-Clock-Adjustment"-Funktion sind die folgenden vorteilhaften Weiterbildungen mit Hilfe des erfindungsgemäßen Verfahrens realisierbar.

In einer ersten Weiterbildung wird eine Darstellung eines ausgewählten Kanals über die Anzeigeeinrichtung des Endgeräts dann eingestellt, wenn das letzte Mediaobjekt des ausgewählten Kanals angezeigt wurde. Es erfolgt also keine automatische Fortsetzung mit Mediaobjekten eines anderen Kanals. Beispielsweise könnte in einem derartigen Fall eine Art "Testbild" vergleichbar zu einem herkömmlichen Fernsehsender eingeblendet werden.

Seitens der Einrichtung IM ist die Länge der einzelnen Kanäle bekannt. Wird das Ende eines Kanals erreicht, wird gesteuert durch die Einrichtung automatisch mit der Streaming-Übertragung des ausgewählten Kanals aufgehört. Seitens der Einrichtung IM ist es dann möglich, entweder die Streaming-Verbindung zum Server S1 abzuschließen, um Übertragungskapazitäten einzusparen, oder die Streaming-Verbindung für eventuell nachfolgend gewünschte weitere Mediaobjekte eines anderen Kanals aufrecht zu erhalten, um schnell auf Kundenwünsche reagieren zu können.

In einer zweiten Weiterbildung ist es seitens des Endgeräteteilnehmers möglich, über das Endgerät EG so genannte "Bookmarks" als Lesezeichen bei beliebig ausgewählten Stellen des Datenstroms zu setzen. Dadurch wird dem Endgeräteteilnehmer ermöglicht, zu einem späteren Zeitpunkt beim Lesezeichen beginnend eine Übertragung eines ausgewählten Mediaobjekts oder Kanals oder einer beliebigen content-Stelle fortzusetzen.

Optional ist es möglich, dass der Endgeräteteilnehmer für jedes gesetzte Lesezeichen einen eigenen Namen vergibt oder dass der Namen seitens des Servers S1 anhand des gezeigten Inhalts vergeben wird.

Vorteilhafterweise beinhaltet dieser Name Angaben, um ein schnelles Auffinden des Lesezeichens zu ermöglichen.

In einer dritten Weiterbildung ist es möglich, als "teaser" bezeichnete Werbeanzeigen ein- bzw. auszuschalten. Diese "teaser" umfassen beispielsweise kurze Auszügen von zugeordneten Mediaobjekten, die auch als "hotest scene" bezeichnet werden. Wird ein Endgeräteteilnehmer durch einen "teaser" angesprochen, ist es mit Hilfe der vorliegenden Erfindung möglich, mit geringem Steuerungsaufwand das zugeordnete Mediaobjekt direkt anzusteuern.

Seitens der Einrichtung IM werden mit Hilfe einer so genannten "playlist" aktuelle "teaser" und ggf. neu hinzukommende "teaser" aufgelistet. Dabei ist für jeden "teaser" ein Offsetwert bekannt. Gegebenenfalls kann auch anhand eines ermittelten Offestwertes an eine belibiege Stelle eines ausgewählten "teaser" gesprungen werden.

Wird seitens des Endgeräteteilnehmers ein "teaser" ausgewählt, so sucht die Einrichtung IM den zugeordneten Offsetwert heraus und veranlasst die Übertragung des Inhalts des zugeordneten Mediaobjekts bzw. "teaser" an das Endgerät EG.

Werden die jeweiligen Steuerungsbefehle zentral ausgewertet, ist es auch möglich, über so genannte "ratings" Kundenverhalten festzustellen. Vorteilhaft können dann basierend auf den "ratings" speziell abgestimmte "teaser" dem Kunden angeboten werden, um diesen zu einem Kauf zu bewegen.

Über die "ratung"-Funktion werden auch statistische Auswertungen ermöglicht.

In einer vierten Weiterbildung werden Kanäle mit unterschiedlicher Spieldauer unterstützt. Wählt ein Endgeräteteilnehmer einen Kanal zur Anzeige aus, dessen Mediaobjekte in Abhängigkeit von einer Sendezeit bereits als übertragen gelten, wird dem Kunden ein Endbild oder Testbild oder ein schwarzer Bildschirm oder ähnliches angezeigt. Mit Hilfe der erfindungsgemäßen Steuerungsbefehle wird dem Endgeräteteilnehmer ermöglicht, auch als bereits gesendet geltende Mediaobjekte nach Beendigung der Kanalübertragung anzusehen.

Die Steuerung der Endbildanzeige wird seitens der Einrichtung IM vorgenommen. Vorteilhafterweise wird in diesem Fall die Streaming-Verbindung zwischen Server und Endgerät nicht unterbrochen, um auf Kundenwünsche schnell reagieren zu können.

Zur Unterscheidung zwischen Endgeräten herkömmlicher Bauart, d.h. die über keinerlei Mittel zur Durchführung des erfindungsgemäßen Verfahrens verfügen, und denjenigen Endgeräten, die das erfindungsgemäße Verfahren ausführen können, kann beispielsweise ein erster gesendeter Steuerungsbefehl analysiert werden. Weist dieser einen Wert von "001" bis "999" auf, so handelt es sich um ein an die Erfindung angepasstes Endgerät.

## Patentansprüche

1. Verfahren zur Steuerung einer Übertragung von Mediaobjekten, die als kontinuierlicher Datenstrom von einem Server zu einem Endgerät zur Wiedergabe übertragen werden,
- bei dem in Kanälen gruppierbare Mediaobjekte von einer Quelle für einen Server bereitgestellt werden,
- bei dem die Mediaobjekte von der Quelle zum Server übermittelt und dort zusammengefasst als kontinuierlicher Datenstrom zum Endgerät übertragen werden,
- bei dem eine Steuerung der Datenstromübertragung über einen Steuerungskanal erfolgt, wobei der Steuerungskanal zwischen dem Endgerät und dem Server vorgesehen ist und zur Steuerung seitens des Endgeräts gebildete Offsetwerte an den Server übertragbar sind, wobei ein Offsetwert eine Position innerhalb des Datenstroms festlegt,
**dadurch gekennzeichnet,**
- **dass** seitens des Endgeräts ein Steuerungsbefehl gebildet wird, der anstelle eines Offsetwerts über den Steuerungskanal an den ersten Server übertragen wird,
- **dass** der Steuerungsbefehl seitens des ersten Servers erkannt und zur Steuerung der Datenstromübertragung verwendet wird.

2. Verfahren nach Anspruch 1, **dadurch gekennzeichnet, dass** Steuerungsbefehle zumindest teilweise Offsetwerte ersetzen und in einem zur Übertragung der Offsetwerte vorgesehenen Zeitfenster über den Steuerungskanal übertragen werden.

3. Verfahren nach Anspruch 1 oder 2, **dadurch gekennzeichnet, dass** übertragene Mediaobjekte des Datenstroms im Endgerät über ein Wiedergabeprogramm dargestellt werden.

4. Verfahren nach einem der vorhergehenden Ansprüche, **dadurch gekennzeichnet, dass** durch die Steuerungsbefehle
- eine freie Umschaltung zwischen verschiedenen Kanälen erfolgt, oder
- eine freie Umschaltung zwischen Mediaobjekten eines gemeinsamen Kanals erfolgt, oder
- eine Umschaltung zwischen zwei unmittelbar benachbarten Kanälen erfolgt, oder
- eine freie Umschaltung zwischen frei wählbaren Mediaobjekten verschiedener Kanäle erfolgt, oder
- eine Umschaltung zwischen zwei unmittelbar benachbarten Mediaobjekten eines gemeinsamen Kanals erfolgt, oder
- eine Umschaltung auf ein erstes oder auf ein letztes Mediaobjekt eines Kanals erfolgt.

5. Verfahren nach einem der vorhergehenden Ansprüche, **dadurch gekennzeichnet, dass** durch die Steuerungsbefehle
- innerhalb des wiedergegebenen Datenstroms an einer beliebigen Stelle eines Mediaobjekts eines ersten Kanals ein Bookmark als Markierung definiert wird, zu dem nach mehreren Umschaltbefehlen zu Mediaobjekten anderer Kanäle wieder zurückgekehrt werden kann, um beginnend an dieser Markierung die Wiedergabe fortzusetzen, oder
- vorbestimmbare Mediaobjekte oder teaser zur Wiedergabe ausgeblendet oder eingeblendet werden.

6. Anordnung zur Steuerung einer Übertragung von Mediaobjekten, die als kontinuierlicher Datenstrom zwischen einem ersten Server und einem Endgerät übertragen werden,
- mit einer Quelle, die in Kanäle gruppierte Mediaobjekte für einen Server bereitstellt,
- mit einem Server, der mit der Quelle verbunden ist, wobei Mediaobjekte von der Quelle zum Server übermittelt und dort zu einem kontinuierlichen Datenstrom zusammengefasst werden,
- mit einem Endgerät, das mit dem Server einerseits zur Datenstromübertragung verbunden ist und das andererseits zur Steuerung mit dem Server über einen Steuerungskanal verbunden ist, über den zur Steuerung seitens des Endgeräts gebildete Offsetwerte an den Server übertragbar sind, wobei ein Offsetwert eine Position innerhalb des Datenstroms festlegt,
**dadurch gekennzeichnet,**
- **dass** seitens des Endgeräts eine Einrichtung vorgesehen ist, die Steuerungsbefehle bildet und diese anstelle der Offsetwerte an den ersten Server überträgt,
- **dass** seitens des Servers eine Einrichtung vorgesehen ist, die die Steuerungsbefehle als solche erkennt,
- **dass** seitens des Servers eine Einrichtung vorgesehen ist, die die Übertragung der Mediaobjekte vom Server zum Endgerät steuert.
